Europäisches Patentamt

(19) European Patent Office

Office européen des brevets

(11) Publication number: 0 141 037
B1

# (12) EUROPEAN PATENT SPECIFICATION

(45) Date of publication of patent specification: 19.11.87

(51) Int. Cl.⁴: G 02 B 6/04, G 02 B 6/06

(21) Application number: 84108135.9

(22) Date of filing: 04.06.82

(60) Publication number of the earlier application in accordance with Art. 76 EPC: 0 068 175

(54) Image transmission device.

(30) Priority: 18.06.81 JP 92966/81
24.07.81 JP 116053/81
31.07.81 JP 119279/81

(43) Date of publication of application:
15.05.85 Bulletin 85/20

(45) Publication of the grant of the patent:
19.11.87 Bulletin 87/47

(84) Designated Contracting States:
DE FR GB IT NL

(56) References cited:
GB-A-1 219 597
US-A-3 436 142
US-A-3 797 910
US-A-4 153 333

IBM TECHNICAL DISCLOSURE BULLETIN, vol.
22, no. 1, juin 1979, page 242, New York (USA);
L.D.THORP: "Triplet lens"

(73) Proprietor: SUMITOMO ELECTRIC INDUSTRIES LIMITED
No. 15, Kitahama 5-chome Higashi-ku
Osaka-shi Osaka 541 (JP)

(72) Inventor: Yoshida, Kenichi c/o Osaka Works
Sumitomo Elec. Ind., Ltd. 1-3, Shimaya 1-chome
Konohana-ku Osaka (JP)
Inventor: Ono, Kimizo c/o Osaka Works
Sumitomo Elec. Ind., Ltd. 1-3, Shimaya 1-chome
Konohana-ku Osaka (JP)
Inventor: Tsuno, Koichi c/o Osaka Works
Sumitomo Elec. Ind., Ltd. 1-3, Shimaya 1-chome
Konohana-ku Osaka (JP)
Inventor: Nishikawa, Mitsuru c/o Osaka Works
Sumitomo Elec. Ind., Ltd. 1-3, Shimaya 1-chome
Konohana-ku Osaka (JP)

(74) Representative: Henkel, Feiler, Hänzel & Partner
Möhlstrasse 37
D-8000 München 80 (DE)

## Description

The present invention relates to an image transmission fiber optics device according to the precharacterizing portion of the unique claim.

One prior art image transmission fiber optics device is formed of individual optical fibers bundled together in side-by-side relation, each fiber serving as a picture element and consisting of a core having a higher refractive index and a surrounding cladding having a lower refractive index. Due to the difference in refractive index between the core and cladding, light input to the core is totally reflected a great many times at the interface between the core and cladding before reaching the receiving end of the fiber. But light impinging upon the cladding becomes a leaky mode, and as it is reflected or scattered at various interfaces in the interior of the transmission path, it is carried over to the receiving end as noise light, providing only a low-contrast image at that end.

Moreover, the cladding that insulates two adjacent optical fibers is usually made of a glass material having fairly high light transmissivity, so cross-talk sometimes occurs between the fibers. If the diameter of each fiber and the distance between adjacent fibers are as small as the wavelength of the light, a significantly large energy is transmitted by the light that travels outside the fibers. The occurrence of crosstalk becomes more conspicuous as the difference in refractive index between the core and cladding is decreased, and this gain reduces the contrast of the image transmitted to the receiving end. There have been proposed many image transmission devices wherein the difference in refractive index between the core and cladding is 4% or less of the refractive index of the core, but no great attention has been paid to the ratio of illumination through one core that crosses through to the next adjacent one, although this ratio is a factor that determines the contrast of the image transmitted to the receiving end. This is mainly because in the early state of their development, image transmission devices were most frequently used only for the purpose of viewing objects. Recently, however, they have come to be used for pattern recognition and size measurement, and an image transmission device that can transmit a high-contrast image suitable for these purposes is demanded.

A method of directly covering the cladding to prevent crosstalk has been devised (this method is conventionally called direct masking), but it is difficult to apply to an image transmission device wherein the distance between adjacent cores is as small as a few microns. Therefore, a main object of the present invention is to provide an image transmission device that is free from this defect and is capable of transmitting a high-contrast image.

According to the present invention this object is achieved by providing the characterizing features of the claim.

Other objects and advantages of the present invention will become apparent from the detailed description which follows when considered in conjunction with the accompanying drawings in which:

Fig. 1 is a longitudinal sectional view showing the structure of an image transmission device according to an embodiment of the present invention;

Figure 2 is a front view of the mask used in Fig. 1, and

Figure 3 illustrates the preparation of the mask.

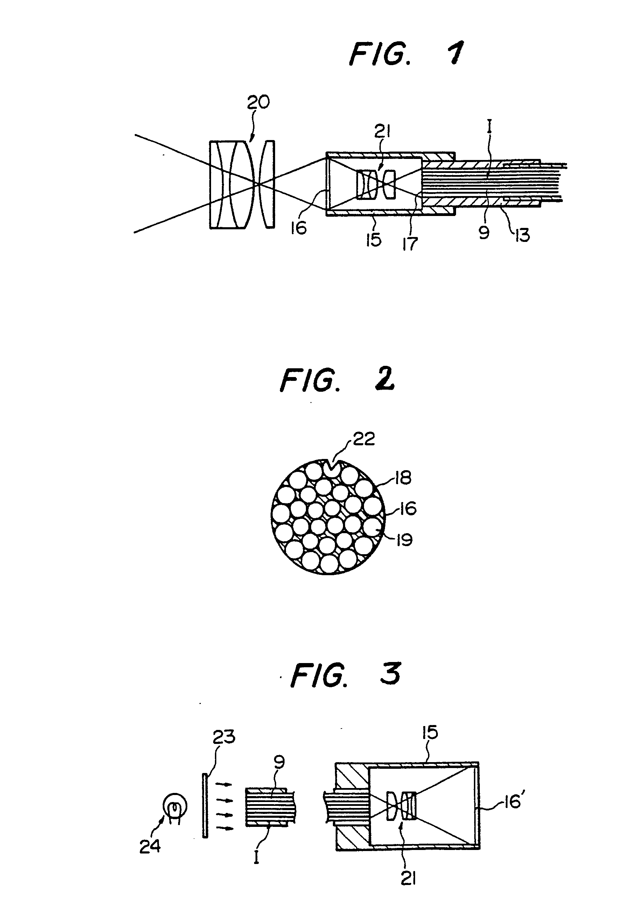

Figure 1 shows an image transmission fiber optics device I, the connected end portion of which is fitted into a cylindrical connector 13. A mask member 16 is placed in front of the sensing end 17 of the transmission device, the mask member 16 being larger in size in comparison with the sensing end 17 of the transmission device and having a lower light transmissivity in the areas 18 corresponding to the areas of the sensing end 17 of the transmission device that make no contribution to image transmission. That area of the mask 16 which is indicated by 19 represents a plurality of light-transmitting areas that are arranged in pattern corresponding to the core array of the optical fibers 9 on the sensing side. Fig. 1 further includes an imaging lens system 20 that is positioned in front of the mask 16 to project the incident light toward the mask. The light incident on the mask 16 is projected onto the sensing end 17 of the image transmission device I by a mask projecting lens system 21 provided in the adapter 15.

In the image transmission device shown in Figs. 1 and 2, any incident light that would enter the cladding is absorbed by the non-transmitting areas 18 of the mask 16, and only the incident light that would enter the cores passes through the transmitting areas 19 and is projected by the lens system 21 onto the core array of the sensing end 17.

One method of preparing the mask 16 is illustrated in Fig. 3. First, a photographic film 16' is attached to the tip of the mask adapter 15 connected on the one end of the image transmission device I which includes the mask projecting lens system 21. The film has at least one notch 22 for ensuring good matching with the mask adapter 15, and the mask adapter has a corresponding projection at the end thereof. A light source 24 is placed at the back of the image transmission device I, with a diffusion plate 23 placed inbetween. The fiber array 9 is then projected on the sensing end of the transmission device I onto the film 16' through the lens system 21. The film is then removed and printed to a hard tone and converted to either a positive or negative mask 16. The thus prepared mask 16 has light-transmitting areas 19 that correspond to the core array of the optical fibers 9, and non-transmitting areas 18 having low light transmissivity corresponding to the cladding array. The mask 16 is then attached to the end of the mask adapter 15 by matching the notch 22 with the projection on the adapter. It is to be understood that the mask 16 can be prepared by any other suitable method, such as by etching a thin metal film.

The present invention can be applied to general types of image transmission devices and to apparatus such as endoscopes and gastroscopes which use such an image transmission device. The image transmission device of the present invention eliminates the possibility of light falling on the cladding, so it is capable of transmitting an image of improved contrast. This result can be achieved by simply making a mask according to the present invention and attaching it to a conventional image transmission device together with a lens system. Moreover, the image transmission device of the present invention can be fabricated more easily than the prior art system using the direct masking method.

### Claim

An image transmission fibre optics device, comprising a plurality of individual optical fibers (9) bundled together in side-by-side relation, each fiber consisting of a core having a higher refractive index and a surrounding cladding having a lower refractive index, characterized in that it further comprises a mask (16) positioned in front of the sensing end (17) of the fibre bundle (9), and a lens system (21) positioned between said end (17) and said mask (16) and imaging said mask (16) onto said end (17), said mask (16) being larger in size than said end (17) and being transparent only at areas (19) which are conjugate to the cores of the fibre bundle (9).

### Patentanspruch

Lichtleitfaser-Bildübertragungsvorrichtung, umfassend eine Anzahl einzelner Lichtleitfasern (9), die nebeneinander liegend gebündelt sind und die jeweils aus einem Kern mit einem höheren Brechungsindex und einem umhüllenden Überzug mit einem niedrigeren Brechungsindex bestehen, dadurch gekennzeichnet, daß sie weiterhin eine dem Meßende (17) des Faserbündels (9) vorgeschaltete Maske (16) und ein zwischen dem genannten Ende (17) und der Maske (16) angeordnetes und die Maske (16) auf das Ende (17) abbildendes Linsensystem (21) aufweist, wobei die Maske (16) größere Abmessungen als das Ende (17) aufweist und nur in Bereichen durchsichtig ist, die zu den Kernen des Faserbündels (9) konjugiert sind.

### Revendication

Dispositif à optique par fibres pour transmission d'image, comprenant plusieurs fibres optiques distinctes (9) réunies ensemble côte à côte en faisceau, chaque fibre étant constituée par une âme qui possède un indice de réfraction plus élevé et par un revêtement environnant qui possède un indice de réfraction moins élevé, caractérisé en ce qu'il comprend en outre un masque (16) placé en avant de l'extrémité détectrice (17) du faisceau de fibres (9), et un système de lentilles (21) placé entre ladite extrémité (17) et ledit masque (16) et formant une image dudit masque (16) sur ladite extrémité (17), ledit masque (16) étant d'une dimension plus grande que ladite extrémité (17) et n'étant transparent que dans des zones (19) qui correspondent aux âmes du faisceau de fibres (9).

## FIG. 1

## FIG. 2

## FIG. 3

1